# EUROPEAN PATENT SPECIFICATION

(11) **EP 4 320 348 B1**
(45) Date of publication and mention of the grant of the patent: **21.08.2024**
(21) Application number: 22730918.4
(22) Date of filing: 31.05.2022
(51) Int. Cl.: F03D 7/02, F03D 9/10, F03D 9/11, F03D 9/28

(54) **WIND TURBINE POWER PLANT INCLUDING AUXILIARY SYSTEMS**
WINDTURBINENKRAFTWERK MIT ZUSATZSYSTEMEN
CENTRALE ÉOLIENNE COMPRENANT DES SYSTÈMES AUXILIAIRES

(30) Priority: 24.06.2021 EP 21181506
(43) Date of publication of application: 14.02.2024
(73) Proprietor: Siemens Gamesa Renewable Energy A/S, 7330 Brande (DK)
(72) Inventor: HAWKINS, Samuel, 7100 Vejle (DK); JENSEN, Dennis Stachniuk, 7330 Brande (DK)
(74) Representative: SGRE-Association
(86) International application number: PCT/EP2022/064775
(87) International publication number: WO 2022/268454

(56) References cited:
- EP-A2- 1 903 213
- EP-A2- 2 282 055
- EP-A2- 2 479 429
- WO-A2-2004/059814
- WO-A2-2011/019321
- US-A1- 2020 166 017

## Description

### Field of invention

The present invention relates to the technical field of efficiently providing power to the auxiliary systems comprised in a power plant including at least a wind turbine.

### Art Background

Wind turbines operate by converting moving wind into rotational motion which is then converted into electrical power using a power conversion system. The power conversion system typically includes the wind turbine rotor made up of aerodynamic rotor blades a rotating shaft, a transmission system or gearbox, a generator, and finally a power conditioning system which may include high power frequency converters. The electrical power generated is then fed into an electrical power grid or to an electrical consumer.

Due to the design of the power conversion system and/or inefficiencies in the power conversion system the wind turbine is not able to produce power at all wind speeds and typically has a cut-in wind speed and/or cut-in rotor speed which is the minimum required wind speed or rotor speed before the wind turbine can deliver power to the electrical power grid. When the wind speed or rotor speed of the wind turbine is below the cut-in speed then power must be consumed by the wind turbine to power systems within which are necessary for operation and protection. These systems are referred to as auxiliary systems and may include components such as pumps, fans, and motors as well as lights, heaters, sensors, control systems, communication systems and other similar devices and systems.

The power consumption of the auxiliary systems can range from only a few watts to over 100 kilowatts or more, depending on the operational state and size of the individual wind turbine. For a wind turbine operator this power consumption can result in high costs as the power may need to be purchased from an electrical network or supplied through other, costly, sources. For operators of wind parks consisting of multiple wind turbines, the consumption of power from non-producing wind turbines subtracts from the output of wind turbines which are producing power resulting in lower revenue.

In some other occasions, for example when there is a fault in the wind turbine power conditioning system, the wind turbine will not be able to deliver power to the electricity network regardless of the wind speed. During this time, power consumption will be used again from the electricity network for auxiliary systems within the wind turbine. The possibility to use energy storages is described in EP 2 282 055 A2, EP 1 903 213 A2, WO 2004/059814 A2, US 2020/166017 A1 and WO 2011/019321 A2. However, the connections auxiliary systems, the energy storages and the electrical power grid does not yet permit a convenient power consumption management.

Therefore, there is still a need for providing a more efficient power transmission line for providing power to the auxiliary systems comprised in a power plant including at least a wind turbine.

### Summary of the Invention

This need may be met by the subject matter according to the independent claims. Advantageous embodiments of the present invention are described by the dependent claims.

According to an aspect of the present invention it is provided a wind turbine plant including:
at least one wind turbine,
one or more turbine auxiliaries,
a transmission apparatus for transmitting electrical power generated by at the least one wind turbine to a power system, the transmission apparatus comprising an auxiliary circuit for transmitting power to one or more turbine auxiliaries, the auxiliary circuit being connected to the at least one wind turbine, the power system and the one or more turbine auxiliaries, the turbine auxiliaries being electrically fed by the at least one wind turbine or the power system through the auxiliary circuit, wherein the auxiliary circuit includes at least an energy storage , the turbine auxiliaries being electrically connected to the energy storage, and
a controller configured for:
   putting the wind turbine in operation,
   sending power to the power system and to the energy storage,
   if the wind turbine stops producing electric power for the power system, using the auxiliary circuit for supplying energy to the turbine auxiliaries,
   wherein power is sent to the energy storage if the wind turbine is producing the maximum allowable power or if the wind turbine is producing power above a predefined power threshold below the maximum allowable power or if conditions are identified that are typically associated with predefined values of electricity or if the value of electricity is below a predefined threshold, wherein the transmission apparatus comprises at least one auxiliary circuit breaker for disconnecting the auxiliary circuit from the at least one wind turbine and the power system.

The controller may include one or more units. If the power plant includes a plurality of turbines, one single controller may be provided at a centralized power plant level or as "controller" it may be meant a plurality of controllers, for example including a centralized portion at a centralized power plant level and a plurality of distributed portions at the turbines level.

According to embodiments of the present invention, the auxiliary circuit comprises an auxiliary line for connecting the turbine auxiliaries to the at least one wind turbine or the power system by-passing the energy storage.

According to embodiments of the present invention, the energy storage may comprise any of a battery electric storage system, a super capacitor, a flywheel, a hydrogen electrolysis or fuel cell system or any other energy storage that may be replenished through electric power.

The above-described transmission apparatus provides a plurality of advantages. The use of an energy storage system prevents or reduces the flow of power into a wind turbine or wind farm, thereby preventing the power plant from becoming a consumer of energy. This provides a benefit by reducing the costs associated with the purchase of electrical energy. By avoiding consumption of energy from an external grid, the wind turbine or wind farm can reduce their carbon emissions by avoiding use of energy that may be generated by carbon intensive technologies.

The present invention may be integrated in a single wind turbine or in wind farm comprising a plurality of wind turbines.

According to another aspect of the present invention it is provided a method of operating a wind turbine plant as above described, wherein the method comprises the steps of:
putting the at least one wind turbine in operation,
sending power to the power system and to the energy storage,
if the wind turbine stops producing electric power for the power system, using the auxiliary circuit for supplying energy to the turbine auxiliaries.

Power is sent to the energy storage if the wind turbine is producing the maximum allowable power or if the wind turbine is producing power above a predefined power threshold below the maximum allowable power or if conditions are identified that are typically associated with predefined values of electricity.

According to embodiments of the present invention it is provided a method of operating a wind park including a plurality of wind turbines as above described, wherein the method comprises the steps of:
putting the wind turbines in operation,
sending power to the power system and to the energy storages of the wind turbines,
if a wind turbine stops producing electric power for the power system and if the power produced by the wind farm is below a predefined threshold, using the auxiliary circuit for supplying energy to the respective turbine auxiliaries.

Using only the flow of power on a wind farm level, rather than the individual wind turbine level, avoids overuse of the energy storage system. Some energy storage systems (such as battery electric storage) can have a limited number of lifetime cycles and so overuse may lead to early end-of-life and replacement.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 schematically illustrates a wind power plant including a transmission apparatus for transmitting electrical power between the wind power plant and a power system according to a first embodiment of the invention.
Fig. 2 schematically illustrates a wind power plant including a transmission apparatus for transmitting electrical power between the wind power plant and a power system according to a second embodiment of the invention.
Fig. 3 illustrates steps of a first embodiment of a method for transmitting electrical power between a wind power plant, a power system and one or more auxiliaries according to embodiments of the invention.
Fig. 4 illustrates steps of a second embodiment of a method for transmitting electrical power between a wind power plant, a power system and one or more auxiliaries according to embodiments of the invention.
Fig. 5 illustrates further steps of the method according to second embodiment of figure 4.

### Detailed Description

The illustration in the drawings is in schematic form. It is noted that in different figures, similar or identical elements are provided with the same reference signs.

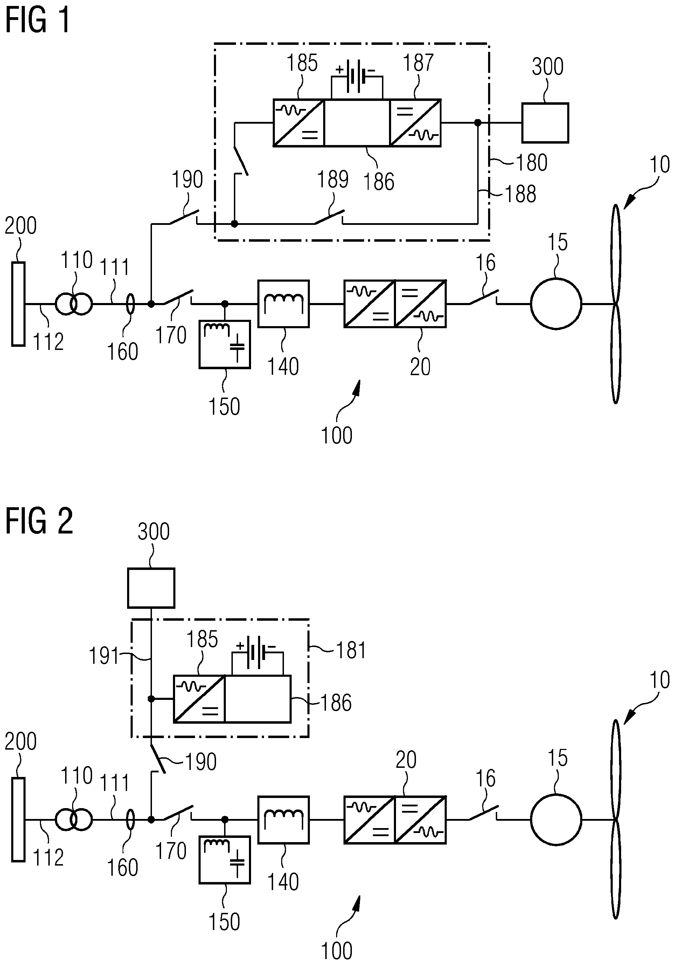

**Fig. 1** illustrates a wind power plant 10 including a transmission apparatus 100 interposed between the wind power plant 10 and a power system 200, according to a first embodiment of the present invention. The transmission apparatus 100 is represented according to a single line scheme, but may be a 3-phase system, where the single line of figure 1 represents alone the three conductors of a typical 3-phase system. The wind power plant 10 may include one or more wind turbines (one wind turbine 10 is represents in the schematic drawing of the embodiment in figure 1). The wind power plant 10 includes one or more controllers 250 (one controller is shown in figure 1). If the wind power plant 10 includes a plurality of wind turbines a plurality of controllers 250 may be provided, one for each turbine. The controller 250 may include a centralized part at the power plant level and a plurality of distributed portions at the turbine level. The wind power plant 10 may be an off-shore wind power plant or an off-shore wind power plant. The power system 200 may consist of a utility grid or other electrical consumer. The transmission apparatus 100 is connected to the power plant 10 and to the power system 200 for transmitting the electrical power generated by the wind power plant 10 to the power system 200. Each wind turbines of the wind power plant 10 includes an electrical generator 15 (one electrical generator 15 is represents in the schematic drawing of the embodiment in figure 1). Each wind turbines of the power plant 10 further includes a wind turbine frequency converter 20. The wind turbine power converter 20 is connected to the electrical generator 15. Between the frequency converter 20 and the electrical generator 15 a generator circuit breaker 16 is provided.

The transmission apparatus 100 comprises a transformer 110 which is connectable between the wind power plant 10 and the power system 200. According to other embodiments of the present invention (not shown) the transmission apparatus 100 may comprise more than one transformer 110. The transformer 110 is configured for changing in operation a first AC voltage level provided by the wind power plant 10 to a second AC voltage level to be provided to the power system 200. The present invention may be applied to any transmission apparatus 100 and any transformer 110, independently from the values of the first AC voltage level and the second AC voltage level. The transmission apparatus 100 includes a reactor 140 connectable in series between the output of the frequency converter 20 and the first side 111 of the transformer 110. The reactor 140 may be used for cooperating in controlling the reactive power transmitted along the transmission apparatus 100. The transmission apparatus 100 further includes an harmonics filter 150, having a terminal connected between the reactor 140 and the first side 111 of the transformer 110. The reactor 140 and the impedance 150 together may form a filter for the voltage output of the frequency converter 20. The transmission apparatus 100 further includes a current transformer 160 connected to the first side 111 of the transformer 110 and a main circuit breaker 170 interposed between the current transformer 160 and reactor 140. The transmission apparatus 100 includes a first voltage portion extending between the transformer 110 and the frequency converter 20 and a second voltage portion extending between the transformer 110 and the power system 200.

The transmission apparatus 100 further includes at least one auxiliary circuit 180 having a terminal connected upstream the first side 111 of the transformer 110. The auxiliary circuit 180 transmits power to one or more turbine auxiliaries 300. The auxiliary circuit 180 is connected to the wind power plant 10, the power system 200 and one or more turbine auxiliaries 300. The auxiliary circuit 180 branches off from the first voltage portion of the transmission apparatus 100. The turbine auxiliaries 300 may comprise a cooling pump or a fan or a pitch drive associated to the blades of a wind turbine or a yaw drive associated to a nacelle of a wind turbine or similar other electrical consumers within the wind power plant 10 like a dehumidification system or an external lighting system or a control and monitoring system. The turbine auxiliaries 300 are electrically fed by the wind power plant 10 or the power system 200 through the auxiliary circuit 180, as better described in the following. The auxiliary circuit 180 may be disconnected from the wind power plant 10 and the power system 200 through an auxiliary circuit breaker 190.

In the embodiment of figure 1, the auxiliary circuit 180 comprises an AC/DC converter 185, an energy storage 186 and a DC/AC converter 187, arranged in series from the auxiliary circuit breaker 190 to the turbine auxiliaries 300 and therethrough to the wind power plant 10 and the power system 200. The energy storage 186 may comprise a battery electric storage system, a super capacitor, a flywheel, a hydrogen electrolysis or fuel cell system or another energy storage system. A by-pass line 188 is arranged in parallel to the AC/DC converter 185, energy storage 186 and DC/AC converter 187, for directly connecting the turbine auxiliaries 300 to the auxiliary circuit breaker 190 and therethrough to the wind power plant 10 and the power system 200. The by-pass line 188 includes a by-pass breaker 189.

**Fig. 2** illustrates a transmission apparatus 100 interposed between a wind power plant 10 and a power system 200, according to a second embodiment of the present invention. The second embodiment differentiates itself from the first embodiment for comprising another type of connection between the auxiliary circuit 181, the wind power plant 10, the power system 200 and one or more turbine auxiliaries 300. The transmission apparatus 100 includes an auxiliary line 191 for directly connecting the turbine auxiliaries 300 to the auxiliary circuit breaker 190 and therethrough to the wind power plant 10 and the power system 200. The auxiliary circuit 181 of this second embodiment includes the AC/DC converter 185 and the energy storage 186, wherein the AC/DC converter 185 is connected to the auxiliary line 191, between the auxiliary circuit breaker 190 and the turbine auxiliaries 300.

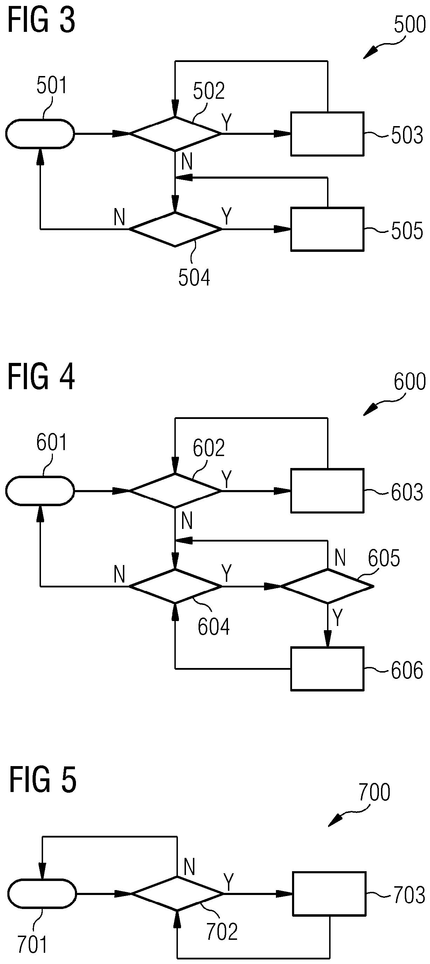

**Fig. 3** illustrates a method 500 of operating the wind power plant 10 above described including one wind turbine. The method may be implemented in the controller 250 of the wind turbine. In a first step 501 of the method, the wind turbine is put in operation. While the wind turbine is in operation, energy is sent to the power system 200. In a second step 502 of the method 500, a condition is checked for allowing power to be sent to the energy storage 186. If the condition in the second step 502 is satisfied, then a third step 503 of the method 500 is performed, during which energy is stored into the energy storage 186. In an embodiment, the condition in the second step 502 is met if the wind turbine is producing the maximum allowable power, as permitted by the grid connection. The wind turbine may extract power from the wind in excess of what is permitted for supply to the grid and deliver this excess to the energy storage system. In another embodiment, the condition in the second step 502 is met if the wind turbine is producing power above a predefined power threshold below the maximum allowable power. In a further embodiment, the condition in the second step 502 is met if conditions (time of day, wind speed, temperature, etc.) are present that are typically associated with relatively low value of electricity. The value of electricity may also be directly monitored and used as a condition. If the condition in the second step 502 is not satisfied, then a fourth step 504 of the method 500 is performed, during which it is checked if the wind turbine can operate. For example, when the wind speed becomes low, the wind turbine stops producing electricity power for the power system 200. This may be detected though measurement of the current flowing to the power system 200, or by setting a minimum threshold for the rotational speed of the wind turbine, or by other means. When the wind turbine experiences a fault, it may also stop producing electricity for the power system 200 and go into a standstill or idling mode. If in the fourth step 504 it is detected that the wind turbine has stopped producing electric power for the power system 200, a fifth step 505 of the method 500 is performed, during which the auxiliary circuit 180, 181 supply energy to the turbine auxiliaries 300. In an embodiment, the auxiliary circuit breaker 190 disconnects the auxiliary circuit 180, 181 from the power system 200 and the energy storage 186 supplies the necessary power to the turbine auxiliaries 300. In another embodiment, the auxiliary circuit 180, 181 remains connected to the power system 200 and the energy storage 186 provides power to the turbine auxiliaries 300 and to the grid connection so that the flow of power into the wind turbine is reduced or reversed. By supplying power from the energy storage to the grid connection, power consumption from neighbouring wind turbines may be offset, thereby reducing the overall consumption of power by a wind farm with non-producing wind turbines. The amount of available energy in the energy storage 186 is monitored, so that before the energy storage 186 reaches a predetermined depletion threshold, the supply of power from the energy storage 186 is discontinued. When this occurs, the auxiliary circuit 180, 181 returns to being supplied power from the power system 200. Once conditions are appropriate the wind turbine will return to operation (fault cleared or wind speed or
rotor speed sufficient for positive power flow out of the wind turbine). The third step of the method 503 will be executed again when the condition in the second step 502 is again satisfied.

**Figs. 4** and **5** illustrate a method 600, 700 of operating the wind power plant 10 above described including a plurality of wind turbines arranged in a wind farm. The method may be implemented in the controller 250 of the wind power plant 10. In this implementation, the objective of the wind farm operator may be to reduce the overall flow of power into the wind farm (rather than just individual wind turbines). In this embodiment a measure of the net power flow for the entire wind farm is made using either a single power flow measurement or multiple distributed measurements combined. The method of operating the wind power plant 10 comprises a first set 600 of steps, which are executed at each wind turbine of the power plant 10. In a first step 601 of the first set 600 of steps, the wind turbine is put in operation. While the wind turbine is in operation, energy is sent to the power system 200. In a second step 602, a condition is checked for allowing power to be sent to the energy storage 186. If the condition in the second step 602 is satisfied, then a third step 603 is performed, during which energy is stored into the energy storage 186. In an embodiment, the condition in the second step 602 is met if the wind turbine is producing the maximum allowable power, as permitted by the grid connection. The wind turbine may extract power from the wind in excess of what is permitted for supply to the grid and deliver this excess to the energy storage system. In another embodiment, the condition in the second step 602 is met if the wind turbine is producing power above a predefined power threshold below the maximum allowable power. In a further embodiment, the condition in the second step 602 is met if conditions (time of day, wind speed, temperature, etc.) are present that are typically associated with relatively low value of electricity. The value of electricity may also be directly monitored and used as a condition. If the condition in the second step 602 is not satisfied, then a fourth step 604 of the method 500 is performed, during which it is checked if the wind turbine can operate. For example, when the wind speed becomes low, the wind turbine stops producing electricity power for the power system 200. This may be detected though measurement of the current flowing to the power system 200, or by setting a minimum threshold for the rotational speed of the wind turbine, or by other means. When the wind turbine experiences a fault, it may also stop producing electricity for the power system 200 and go into a standstill or idling mode. If in the fourth step 604 it is detected that the wind turbine has stopped producing electric power for the power system 200, a fifth step 605 of the method 500 is performed, during which it is checked if the controller 250 of the power plant 10 has sent a command to reduce power consumption. This is performed through a second set 700 of steps of the method (shown in fig. 5). The controller 250 of the power plant 10 put the wind farm into operation (first step 701) and perform a control to check if the power produced by the wind farm is below a predefined threshold (second step 702). If such condition is satisfied, the command to reduce power consumption is sent to the wind turbines (third step 703). After that, in the fifth step 605, each turbine detects the presence of such command, then a sixth step 606 of the method 600 is performed, during which the auxiliary circuit 180, 181 supply energy to the turbine auxiliaries 300 of the respective wind turbine. Each individual wind turbine is not using its energy storage 186 to supply its turbine auxiliaries 300 until the command from then centralized control system is sent. Once a sufficient number of wind turbines within the wind farm stop operating, such that power begins to flow into the wind farm, a communication system is used to communicate to wind turbines which are out of operation to begin using their energy storage systems to supply their auxiliary systems. The centralized control system may be designed so that it tries to use only the minimum amount of power from the energy storage systems to keep the flow of power into the wind farm at zero. This may be done by sending the command to utilize the energy storage system to only a portion of the wind turbines which are out of operation or (for auxiliary systems which remain grid connected while being powered by the energy storage system) by sending a reference power to the energy storage systems so that they only reduce auxiliary consumption by a sufficient amount.

## Claims

1. A wind turbine plant including:
at least one wind turbine (10),
one or more turbine auxiliaries (300),
a transmission apparatus (100) for transmitting electrical power generated by the at least one wind turbine (10) to a power system (200), the transmission apparatus (100) comprising an auxiliary circuit (180, 181) for transmitting power to one or more turbine auxiliaries (300), the auxiliary circuit (180, 181) being connected to the at least one wind turbine (10), the power system (200) and the one or more turbine auxiliaries (300), the turbine auxiliaries (300) being electrically fed by the at least one wind turbine (10) or the power system (200) through the auxiliary circuit (180, 181), wherein the auxiliary circuit (180, 181) includes at least an energy storage (186), the turbine auxiliaries (300) being electrically connected to the energy storage (186), and
a controller (250) configured for:
putting the wind turbine (10) in operation,
sending power to the power system (200) and to the energy storage (186),
if the wind turbine stops producing electric power for the power system (200), using the auxiliary circuit (180, 181) for supplying energy to the turbine auxiliaries (300),
wherein power is sent to the energy storage (186) if the wind turbine is producing the maximum allowable power or if the wind turbine is producing power above a predefined power threshold below the maximum allowable power or if conditions are identified that are typically associated with predefined values of electricity or if the value of electricity is below a predefined threshold, wherein the transmission apparatus (100) comprises at least one auxiliary circuit breaker (190) for disconnecting the auxiliary circuit (180, 181) from the at least one wind turbine (10) and the power system (200).

2. The wind turbine plant according to claim 1, wherein the auxiliary circuit (180, 181) comprising an auxiliary line (188, 191) for connecting the turbine auxiliaries (300) to the at least one wind turbine (10) or the power system (200) by-passing the energy storage (186).

3. The wind turbine plant according to claim 1 or 2, wherein the energy storage (186) comprises a battery electric storage system, a super capacitor, a flywheel, a hydrogen electrolysis or fuel cell system.

4. The wind turbine plant according to any of the previous claims, wherein the transmission apparatus (100) comprises one transformer (110), the transformer having a first side (111) connected to the at least one wind turbine (10) and a second side (112) connected to the power system (200), the auxiliary circuit (180, 181) being connected to the first side (111) of the transformer.

5. The wind turbine plant according to any of the previous claims, wherein the turbine auxiliaries (300) include any of a cooling pump or a fan or a pitch drive or a yaw drive hydraulic pressure and distribution pump or a dehumidification system or an external lighting system or a control and monitoring system.

6. The wind turbine plant according to any of the previous claims, wherein the power system (200) is a utility grid.

7. The wind turbine plant according to any of the previous claims, wherein the wind turbine plant includes a plurality of wind turbines (10, the controller (250) being configured for:
putting the plurality of wind turbines (10) in operation,
sending power to the power system (200) and to the energy storages (186) of the wind turbines (10),
if a wind turbine stops producing electric power for the power system (200) and if the power produced by the wind farm is below a predefined threshold, using the auxiliary circuit (180, 181) for supplying energy to the respective turbine auxiliaries (300).

8. A method (500) of operating the wind power plant according to any of the claims 1 to 6, wherein the method comprises the steps of:
putting the at least one wind turbine (10) in operation,
sending power to the power system (200) and to the energy storage (186),
if the wind turbine stops producing electric power for the power system (200), using the auxiliary circuit (180, 181) for supplying energy to the turbine auxiliaries (300), wherein power is sent to the energy storage (186) if the wind turbine is producing the maximum allowable power or if the wind turbine is producing power above a predefined power threshold below the maximum allowable power or if conditions are identified that are typically associated with predefined values of electricity or if the value of electricity is below a predefined threshold.

9. The method (600, 700) of operating the wind turbine according to claim 8, wherein the method comprises the steps of:
putting the wind turbines in operation,
sending power to the power system (200) and to the energy storages (186) of the wind turbines,
if a wind turbine stops producing electric power for the power system (200) and if the power produced by the wind farm is below a predefined threshold, using the auxiliary circuit (180, 181) for supplying energy to the respective turbine auxiliaries (300).

## Patentansprüche

1. Windkraftanlagenanlage, die Folgendes umfasst:
mindestens eine Windkraftanlage (10),
eine oder mehrere Turbinenhilfseinrichtungen (300),
eine Übertragungsvorrichtung (100) zum Übertragen elektrischer Leistung, die durch die mindestens eine Windkraftanlage (10) erzeugt wird, zu einem Stromsystem (200), wobei die Übertragungsvorrichtung (100) eine Hilfsschaltung (180, 181) zum Übertragen von Leistung zu einer oder mehreren Turbinenhilfseinrichtungen (300) umfasst, die Hilfsschaltung (180, 181) mit der mindestens einen Windkraftanlage (10), dem Stromsystem (200) und der einen oder den mehreren Turbinenhilfseinrichtungen (300) verbunden ist, die Turbinenhilfseinrichtungen (300) durch die mindestens eine Windkraftanlage (10) oder das Stromsystem (200) über die Hilfsschaltung (180, 181) elektrisch gespeist werden, die Hilfsschaltung (180, 181) mindestens einen Energiespeicher (186) enthält und die Turbinenhilfseinrichtungen (300) mit dem Energiespeicher (186) elektrisch verbunden sind, und eine Steuereinheit (250), die konfiguriert ist zum:
Versetzen der Windkraftanlage (10) in Betrieb,
Senden von Leistung zum Stromsystem (200) und zum Energiespeicher (186) und
Verwenden der Hilfsschaltung (180, 181) zum Zuführen von Energie zu den Turbinenhilfseinrichtungen (300), wenn die Windkraftanlage aufhört, elektrische Leistung für das Stromsystem (200) zu erzeugen,
wobei Leistung zum Energiespeicher (186) gesendet wird, wenn die Windkraftanlage die maximal zulässige Leistung erzeugt oder wenn die Windkraftanlage Leistung über einem vordefinierten Leistungsschwellenwert unter der maximal zulässigen Leistung erzeugt oder wenn Bedingungen identifiziert werden, die typischerweise vordefinierten Elektrizitätswerten zugeordnet sind, oder wenn der Elektrizitätswert unter einem vordefinierten Schwellenwert liegt, wobei die Übertragungsvorrichtung (100) mindestens einen Hilfsschaltungstrennschalter (190) zum Trennen der Hilfsschaltung (180, 181) von der mindestens einen Windkraftanlage (10) und dem Stromsystem (200) umfasst.

2. Windkraftanlage nach Anspruch 1, wobei die
Hilfsschaltung (180, 181) eine Hilfsleitung (188, 191) zum Verbinden der Turbinenhilfseinrichtungen (300) mit der mindestens einen Windkraftanlage (10) oder dem Stromsystem (200) umfasst, die den Energiespeicher (186) umgeht.

3. Windkraftanlagenanlage nach Anspruch 1 oder 2, wobei der Energiespeicher (186) ein elektrisches Batteriespeichersystem, einen Superkondensator, ein Schwungrad und ein Wasserstoffelektrolyse- oder Brennstoffzellensystem umfasst.

4. Windkraftanlagenanlage nach einem der vorhergehenden Ansprüche, wobei die Übertragungsvorrichtung (100) einen Transformator (110) umfasst, der Transformator eine erste Seite (111), die mit der mindestens einen Windkraftanlage (10) verbunden ist, und eine zweite Seite (112), die mit dem Stromsystem (200) verbunden ist, aufweist und die Hilfsschaltung (180, 181) mit der ersten Seite (111) des Transformators verbunden ist.

5. Windkraftanlagenanlage nach einem der vorhergehenden Ansprüche, wobei die Turbinenhilfseinrichtungen (300) eine einer Kühlpumpe oder eines Lüfters oder einer Anstellansteuerung oder einer Gieransteuerungs-Hydraulikdruck- und Verteilpumpe oder eines Luftentfeuchtungssystems oder eines externen Beleuchtungssystems oder eines Steuer- und Überwachungssystems enthalten.

6. Windkraftanlagenanlage nach einem der vorhergehenden Ansprüche, wobei das Stromsystem (200) ein Versorgungsnetz ist.

7. Windkraftanlagenanlage nach einem der vorhergehenden Ansprüche, wobei die Windkraftanlagenanlage mehrere Windkraftanlagen (10) umfasst und die Steuereinheit (250) konfiguriert ist zum:
Versetzen der mehreren Windkraftanlagen (10) in Betrieb,
Senden von Leistung zum Stromsystem (200) und zu den Energiespeichern (186) der Windkraftanlagen (10) und
Verwenden der Hilfsschaltung (180, 181) zum Zuführen von Energie zu den jeweiligen Turbinenhilfseinrichtungen (300), wenn die Windkraftanlage aufhört, elektrische Leistung für das Stromsystem (200) zu erzeugen, und wenn die Leistung, die durch den Windpark erzeugt wird, unter einem vordefinierten Schwellenwert liegt.

8. Verfahren (500) zum Betreiben der Windkraftanlage nach einem der Ansprüche 1 bis 6, wobei das Verfahren die folgenden Schritte umfasst:
Versetzen der mindestens einen Windkraftanlage (10) in Betrieb, Senden von Leistung zum Stromsystem (200) und zum Energiespeicher (186) und
Verwenden der Hilfsschaltung (180, 181) zum Zuführen von Energie zu den Turbinenhilfseinrichtungen (300), wenn die Windkraftanlage aufhört, elektrische Leistung für das Stromsystem (200) zu erzeugen, wobei Leistung zum Energiespeicher (186) gesendet wird, wenn die Windkraftanlage die maximal zulässige Leistung erzeugt oder wenn die Windkraftanlage Leistung über einem vordefinierten Leistungsschwellenwert unter der maximal zulässigen Leistung erzeugt oder wenn Bedingungen identifiziert werden, die typischerweise vordefinierten Elektrizitätswerten zugeordnet sind, oder wenn der Elektrizitätswert unter einem vordefinierten Schwellenwert liegt.

9. Verfahren (600, 700) zum Betreiben der Windkraftanlage nach Anspruch 8, wobei das Verfahren die folgenden Schritte umfasst:
Versetzen der Windkraftanlagen in Betrieb,
Senden von Leistung zum Stromsystem (200) und zu den Energiespeichern (186) der Windkraftanlagen und
Verwenden der Hilfsschaltung (180, 181) zum Zuführen von Energie zu den jeweiligen Turbinenhilfseinrichtungen (300), wenn die Windkraftanlage aufhört, elektrische Leistung für das Stromsystem (200) zu erzeugen, und wenn die Leistung, die durch den Windpark erzeugt wird, unter einem vordefinierten Schwellenwert liegt.

## Revendications

1. Centrale éolienne incluant :
au moins une éolienne (10),
un ou plusieurs auxiliaires d'éolienne (300),
un appareil de transmission (100) pour la transmission de la puissance électrique générée par l'au moins une éolienne (10) à un système de puissance (200), l'appareil de transmission (100) comprenant un circuit auxiliaire (180, 181) pour la transmission de puissance à un ou plusieurs auxiliaires d'éolienne (300), le circuit auxiliaire (180, 181) étant connecté à l'au moins une éolienne (10), au système de puissance (200) et aux un ou plusieurs auxiliaires d'éolienne (300), les auxiliaires d'éolienne (300) étant électriquement alimentés par l'au moins une éolienne (10) ou le système de puissance (200) par le biais du circuit auxiliaire (180, 181),
dans laquelle le circuit auxiliaire (180, 181) inclut au moins un accumulateur d'énergie (186), les auxiliaires d'éolienne (300) étant électriquement connectés à l'accumulateur d'énergie (186), et
un dispositif de commande (250) configuré pour :
mettre en fonctionnement l'éolienne (10),
envoyer de la puissance au système de puissance (200) et à l'accumulateur d'énergie (186),
si l'éolienne cesse de produire de la puissance électrique pour le système de puissance (200), utiliser le circuit auxiliaire (180, 181) pour l'alimentation en énergie aux auxiliaires d'éolienne (300),
dans laquelle de la puissance est envoyée à l'accumulateur d'énergie (186) si l'éolienne produit la puissance maximale admissible ou si l'éolienne produit une puissance supérieure à un seuil de puissance prédéfini inférieur à la puissance maximale admissible ou si des conditions sont identifiées qui sont typiquement associées à des valeurs d'électricité prédéfinies ou si la valeur d'électricité est inférieure à un seuil prédéfini, dans laquelle l'appareil de transmission (100) comprend au moins un disjoncteur de circuit auxiliaire (190) pour la déconnexion du circuit auxiliaire (180, 181) de l'au moins une éolienne (10) et du système de puissance (200).

2. Centrale éolienne selon la revendication 1, dans laquelle le circuit auxiliaire (180, 181) comprend une ligne auxiliaire (188, 191) pour la connexion des auxiliaires d'éolienne (300) à l'au moins une éolienne (10) ou au système de puissance (200) en contournant l'accumulateur d'énergie (186).

3. Centrale éolienne selon la revendication 1 ou 2, dans laquelle l'accumulateur d'énergie (186) comprend un système d'accumulateur électrique de batterie, un supercondensateur, un volant d'inertie, un système d'électrolyse d'hydrogène ou de pile à combustible.

4. Centrale éolienne selon l'une quelconque des revendications précédentes, dans laquelle l'appareil de transmission (100) comprend un transformateur (110), le transformateur ayant un premier côté (111) connecté à l'au moins une éolienne (10) et un second côté (112) connecté au système de puissance (200), le circuit auxiliaire (180, 181) étant connecté au premier côté (111) du transformateur.

5. Centrale éolienne selon l'une quelconque des revendications précédentes, dans laquelle les auxiliaires d'éolienne (300) incluent l'un quelconque parmi une pompe de refroidissement ou un ventilateur ou une pompe de mise sous pression hydraulique de distribution d'entraînement en calage ou d'entraînement en lacet ou un système de déshumidification ou un système d'éclairage externe ou un système de commande et de surveillance.

6. Centrale éolienne selon l'une quelconque des revendications précédentes, dans laquelle le système de puissance (200) est un réseau électrique.

7. Centrale éolienne selon l'une quelconque des revendications précédentes, dans laquelle la centrale éolienne inclut une pluralité d'éoliennes (10), le dispositif de commande (250) étant configuré pour :
mettre en fonctionnement la pluralité d'éoliennes (10),
envoyer de la puissance au système de puissance (200) et aux accumulateurs d'énergie (186) des éoliennes (10),
si une éolienne cesse de produire de la puissance électrique pour le système de puissance (200) et si la puissance produite par le parc éolien est inférieure à un seuil prédéfini, utiliser le circuit auxiliaire (180, 181) pour l'alimentation en énergie des auxiliaires d'éolienne (300) respectifs.

8. Procédé (500) de fonctionnement de la centrale éolienne selon l'une quelconque des revendications 1 à 6, dans lequel le procédé comprend les étapes de :
la mise en fonctionnement de l'au moins une éolienne (10),
l'envoi de puissance au système de puissance (200) et à l'accumulateur d'énergie (186),
si l'éolienne cesse de produire de la puissance électrique pour le système de puissance (200), l'utilisation du circuit auxiliaire (180, 181) pour l'alimentation en énergie aux auxiliaires d'éolienne (300),
dans laquelle de la puissance est envoyée à l'accumulateur d'énergie (186) si l'éolienne produit la puissance maximale admissible ou si l'éolienne produit une puissance supérieure à un seuil de puissance prédéfini inférieur à la puissance maximale admissible ou si des conditions sont identifiées qui sont typiquement associées à des valeurs d'électricité prédéfinies ou si la valeur d'électricité est au-dessous d'un seuil prédéfini.

9. Procédé (600, 700) de fonctionnement de l'éolienne selon la revendication 8, dans lequel le procédé comprend les étapes de :
la mise en fonctionnement des éoliennes,
l'envoi de puissance au système de puissance (200) et aux accumulateurs d'énergie (186) des éoliennes,
si une éolienne cesse de produire de la puissance électrique pour le système de puissance (200) et si la puissance produite par le parc éolien est inférieure à un seuil prédéfini, l'utilisation du circuit auxiliaire (180, 181) pour l'alimentation en énergie des auxiliaires d'éolienne (300) respectifs.
